Europäisches Patentamt

European Patent Office

Office européen des brevets

(19)

(11) Veröffentlichungsnummer: **0 068 305**
**B1**

(12) # EUROPÄISCHE PATENTSCHRIFT

(45) Veröffentlichungstag der Patentschrift:
**03.10.84**

(51) Int. Cl.³: **A 01 F 25/20**

(21) Anmeldenummer: **82105272.7**

(22) Anmeldetag: **16.06.82**

(54) **Gerät zum Entnehmen von Futterportionen aus Flach- oder Fahrsilos.**

(30) Priorität: **20.06.81 DE 3124362**

(43) Veröffentlichungstag der Anmeldung:
**05.01.83 Patentblatt 83/1**

(45) Bekanntmachung des Hinweises auf die Patenterteilung:
**03.10.84 Patentblatt 84/40**

(84) Benannte Vertragsstaaten:
**AT FR GB NL**

(56) Entgegenhaltungen:
**DE - A - 2 204 832**
**DE - B - 2 817 901**
**DE - C - 2 138 186**
**DE - U - 8 125 549**

(73) Patentinhaber: **Diadem Land- und Baumaschinen GmbH & Co. KG, Diademstrasse, D-4515 Bad Essen-Wittlage (DE)**

(72) Erfinder: **Pohlmann, Reinhard, Westerhauser Strasse 64, D-4520 Melle 3 (DE)**

(74) Vertreter: **Busse & Busse Patentanwälte, Postfach 1226 Grosshandelsring 6, D-4500 Osnabrück (DE)**

## Beschreibung

Die Erfindung betrifft ein Gerät zum Entnehmen von Futterportionen aus Flach- oder Fahrsilos der im Oberbegriff des Anspruchs 1 näher umrissenen Gattung, kurz auch als sog. Blockschneider bezeichnet.

Bei einem bekannten Gerät dieser Art (DE-PS Nr. 2138186) ist das auf- und abbewegbare Ausschneidorgan von einem unten offenen rechteckigen Kasten oder Rahmen gebildet, der an zwei benachbarten und rechtwinklig zueinander verlaufenden Unterkanten je ein Schneidwerk aufweist. Jedes dieser Schneidwerke besteht aus zwei mechanisch angetriebenen, gegenläufig zusammenwirkenden gezahnten Messern, deren Schneiden nach unten gerichtet sind. Bei diesem bekannten Gerät muss der an zwei oder gegebenenfalls auch drei seiner Unterkanten mit je einem Schneidwerk versehene Kasten oder Rahmen mit seinen Seitenwandungen in den von den Schneidwerken erzeugten Schneidspalt eingedrückt werden. Da der von den Schneidwerken erzeugte Schneidspalt notwendigerweise schmaler ist als die Wandstärke des Kastens oder Rahmens, bedarf es einer beträchtlichen Kraft, um den Kasten oder Rahmen als starres und unbewegtes Teil in den von den Schneidwerken an seinen Unterkanten erzeugten Schneidspalt hineinzudrücken. Die benötigte Eindrück- bzw. Absenkkraft wird um so grösser, je höher die Wände des Kastens oder Rahmens sind. Das Ausschneiden und gleichzeitige Absenken des Kastens oder Rahmens lässt sich deshalb auch nur verhältnismässig langsam durchführen. Es kommt hinzu, dass die zum Antrieb der gegenläufig zusammenwirkenden Schneidmesser vorgesehenen, an den Vertikalwänden des Kastens gelagerten und an diesen aussen oder innen vorbeistreichenden Hebel, die nochmals die Breite des Schneidspalts überragen, bei ungünstigen Verhältnissen sich verklemmen können, wenn sich Gut in dem Zwischenraum zwischen den Hebeln und den Vertikalwänden des Kastens oder Rahmens festsetzt.

Die Erfindung hat sich die Aufgabe gestellt, ein Gerät zum Entnehmen von Futterportionen aus Flach- oder Fahrsilos zu schaffen, das unter Beibehaltung des Vorteils der hier in Rede stehenden Art von Blockschneidern, nämlich des gleichzeitigen Ausschneidens zumindest zweier vertikaler Blockflächen mit einem von oben her in den Silostock eindringenden Ausschneidorgan keine oder jedenfalls keine nennenswerte Eindrück- bzw. Absenkkraft erfordert, eine hohe Arbeitsgeschwindigkeit ermöglicht und ausserdem in den Eckbereichen auch bei langfaserigem Gut einen einwandfreien, exakt rechtwinkligen Schnitt erzeugt.

Hierzu zeichnet sich das Gerät nach der Erfindung in erster Linie aus durch die im kennzeichnenden Teil des Anspruchs 1 angegebenen Merkmale. Bei einem erfindungsgemässen Blockschneider dringen somit nur noch die bewegten Teile des Schneidwerks, also die Messerklingen mit ihren Trägern, in den Schneidspalt ein; es gibt somit keine starren, unbewegten Teile eines Kastens oder Rahmens, die in den Schneidspalt eingedrückt werden müssen. Ausserdem führen beim erfindungsgemässen Blockschneider die einzelnen Messerklingen eine Exzenterschleifen-Bewegung im Sinne einer kombinierten Dreh/Schwing-Bewegung oder Dreh/Schub-Bewegung in vertikaler Ebene aus; das bedeutet, dass die Bewegung der Messerklingen damit weitgehend der eines von Hand geführten Messers gleicht; d.h. die Messerklingen werden jeweils schnell und mit Druck durch das Silagegut hindurchgezogen und bewegen sich druckentlastet zurück. Bei richtiger Gestaltung und Anordnung der Antriebe lässt sich insbesondere in den beiden vorderen Eckbereichen zwischen benachbarten Messerklingen jeweils ein totpunktfreier und somit schnellerer durchgehender Einschnitt bei den einander kreuzenden Schnittlinien erreichen, so dass auch bei schwerem, langfaserigem Silagegut ungeschnittene oder nicht exakt sauber geschnittene Bereiche längs der Eckkanten zuverlässig vermieden werden. Infolge des erreichten ziehenden Exaktschnittes der Messerklingen wird eine sehr hohe Arbeitsgeschwindigkeit ermöglicht.

Weitere Merkmale und vorteilhafte Einzelheiten der Erfindung sind in den Ansprüchen 2 bis 10 und in der nachfolgenden Beschreibung angegeben, in der mehrere Ausführungsbeispiele des Gegenstandes der Erfindung anhand von Zeichnungen näher erläutert sind; in der Zeichnung zeigen:

Fig. 1 eine perspektivische Darstellung des Geräts in einer ersten Ausführungsform in Ansicht schräg von oben;

Fig. 2 ,eine Ansicht des Geräts nach Fig. 1 von hinten, d.h. von der Anbauseite her;

Fig. 3 eine Ansicht wie Fig. 1 bei einer zweiten Ausführungsform des Geräts;

Fig. 4 eine vereinfachte Ansicht wie Fig. 1 bei einer dritten Ausführungsform des Geräts;

Fig. 5 eine vereinfachte Ansicht wie Fig. 1 bei einer vierten Ausführungsform des Geräts;

Fig. 6, 7 vereinfachte Ansichten wie Fig. 5 mit zwei weiteren Ausführungsformen des Geräts, und

Fig. 8 eine schematische Draufsicht des mit dem Gerät, gleich welcher Ausführungsform, in einem Silo erzeugten Blockausschnitts.

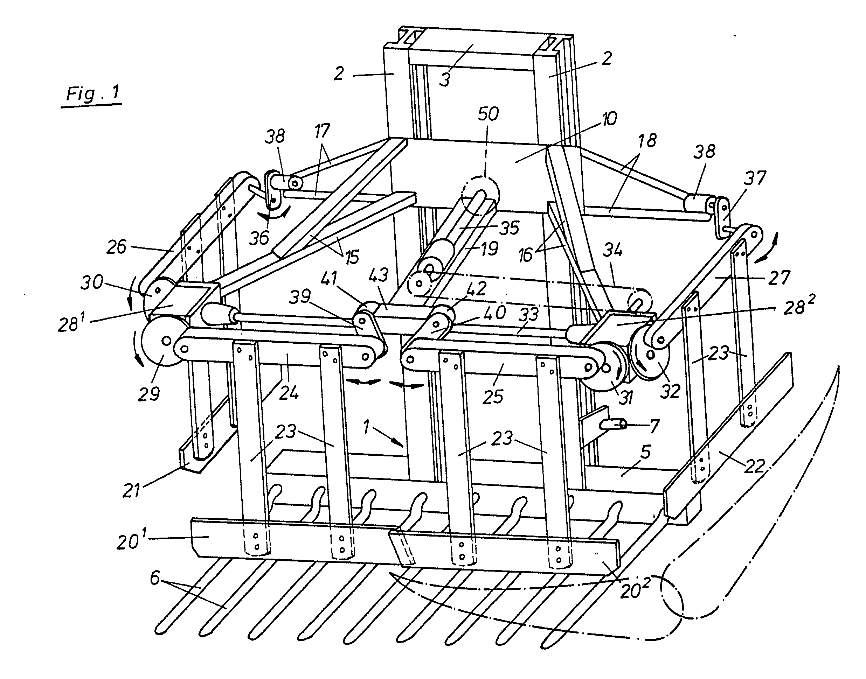

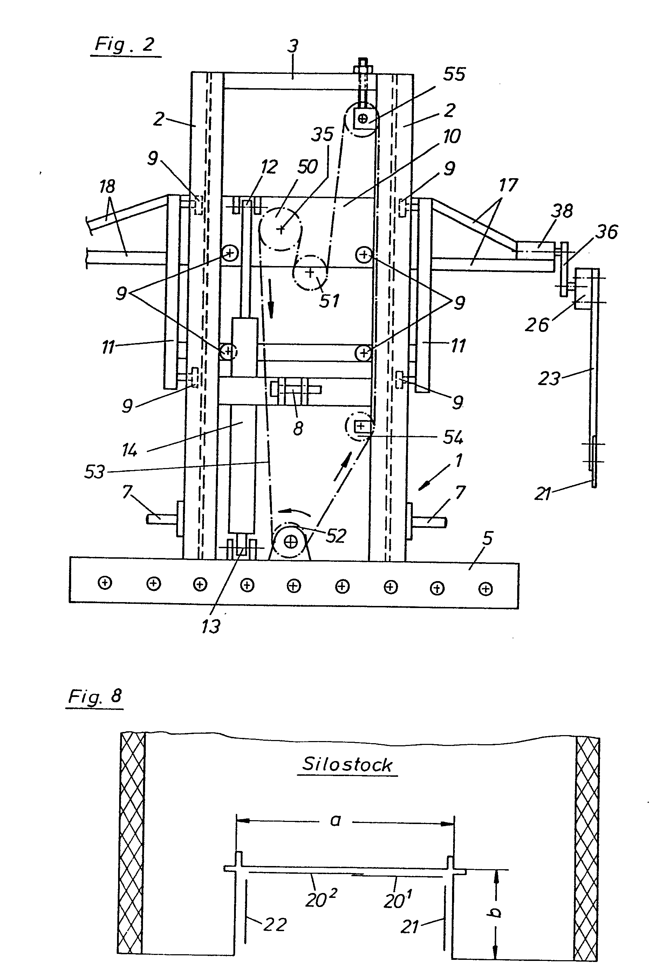

Wie zunächst aus Fig. 1, 2 ersichtlich, umfasst das Gerät ein an die Dreipunkthydraulik eines Schleppers anbaubares, im ganzen mit 1 bezeichnetes Gestell, das im wesentlichen aus zwei vertikalen Stützen 2 mit Querverbindern 3, 4 und einem unteren Querbalken 5 mit einer Mehrzahl sich horizontal erstreckender Zinken 6 besteht. Der Querbalken 5 mit den Zinken 6 bildet eine Gabel aus, die nach ihrem Einstechen in den Futterstock den auszuschneidenden Futterblock untergreift und trägt. Die Kupplungspunkte für den Anschluss des Gestells 1 an die Dreipunkthydraulik eines Schleppers sind mit 7 und 8 (Fig. 2) bezeichnet.

An bzw. in den zweckmässig als Profilträger, z.B. als Doppel-T-Träger, ausgeführten vertikalen Stützen 2 des Gestells 1 ist oberhalb der Gabel 5, 6 eine mittels Führungsrollen 9 auf- und abbewegbare vertikale ausgerichtete Trägerplatte 10 geführt. Um die Trägerplatte 10 hinreichend stabil am Gestell 1 zu halten und an dessen Stützen 2 verkantungsfrei zu führen, ist an der dem Gestell 1 mit den Führungen 2 zugekehrten Rückseite der Trägerplatte 10 zweckmässig eine schlittenartige Stützkonstruktion 11 angebracht, an der sich die Führungsrollen 9 befinden. Eine an der Trägerplatte 10 bei 12 bzw. an deren schlittenartiger Stützkonstruktion 11 am einen Ende angreifende und sich auf dem Zinkenträger 5 der Gabel bei 13 am anderen Ende abstützende Kolben/Zylinder-Anordnung 14 ist dazu bestimmt, die Trägerplatte 10 aus einer unteren Stellung, in der der Abstand zwischen Trägerplatte 10 und Gabel 5, 6 etwa der Höhe eines auszuschneidenden Futterblocks entspricht, in eine obere Stellung von etwa doppelter Blockhöhe oder auch mehr anzuheben.

Von der Trägerplatte 10 erstrecken sich strahlenartig horizontale Tragarme 15, 16, 17, 18 nach vorne bzw. aussen, deren Endpunkte oberhalb der Gabel 5, 6 die Eckpunkte eines gedachten, zur Gabel parallelen Rechtecks von etwa der Grösse des auszuschneidenden Blocks markieren und das Schneidwerk tragen. Die Tragarme 15, 16 erstrecken sich in die in bezug auf den auszuschneidenden Block vorderen Eckbereiche die Tragarme 17, 18 in die hinteren Eckbereiche. Ausserdem ist ein weiterer Tragarm 19 vorgesehen, der sich von der Trägerplatte 10 zwischen den Tragarmen 15, 16 mittig nach vorn erstreckt und mit seinem vorderen Ende eine Mittenabstützung für den die vordere Breitseite des gedachten Rechtecks einnehmenden Teil des Schneidwerks bildet.

Das Schneidwerk selbst wird von einzelnen, an drei Seiten des gedachten Rechtecks jeweils für sich geführten und angetriebenen Messerklingen $20^1$, $20^2$, 21, 22 gebildet, die am unteren Ende von aus der Ebene des gedachten Rechtecks nach unten herabhängenden Haltern 23 befestigt sind. In den gezeichneten Ausführungsbeispielen sind an der vorderen Breitseite des gedachten Rechtecks zwei im wesentlichen gleichebenig nebeneinander liegende, sich im Mittenbereich jedoch ständig oder abwechselnd überlappende Messerklingen $20^1$, $20^2$ vorgesehen, während an den beiden Schmalseiten je eine Messerklinge 21 bzw. 22 vorgesehen ist. Jede der Messerklingen $20^1$, $20^2$, 21, 22 ist mit ihren vertikal herabhängenden Haltern 23 an zwischen den Eckpunkten des gedachten Rechtecks angebrachten und dessen dreiseitige Begrenzung bildenden Antriebs- und Führungsorganen aufgehängt bzw. befestigt. Diese Antriebs- und Führungsorgane sind jeweils so ausgebildet und angetrieben, dass sie den Messerklingen mit ihrem Haltern jeweils eine kombinierte Dreh/Schwing-Bewegung in vertikaler Ebene erteilen.

In den gezeichneten Ausführungsbeispielen bestehen die Antriebs- und Führungsorgane für die Messerklingen mit ihren herabhängenden Haltern aus einzelnen, jeweils einer Messerklinge zugeordneten, balkenförmigen Exzenterstangen 24, 25, 26, 27, deren eines Ende jeweils an einer Antriebskurbel bzw. Exzenterscheibe angelenkt und deren anderes Ende jeweils schwingend oder gleitend gelagert ist. Wie insbesondere aus Fig. 1 ersichtlich, sind den beiden Messerklingen $20^1$, $20^2$ an der vorderen Breitseite des Schneidwerks die Exzenterstangen 24, 25 zugeordnet, der Messerklinge 21 an der einen Schmalseite die Exzenterstange 26 und der Messerklinge 22 an der anderen Schmalseite die Exzenterstange 27.

Bei der hier für die Ausführungsbeispiele angenommenen Gestaltung des Geräts mit je einer den Schmalseiten des Schneidwerks zugeordneten Messerklinge 21 bzw. 22 und zwei der vorderen Breitseite des Schneidwerks zugeordneten Messerklingen $20^1$ bzw. $20^2$ ist zum Antrieb der beiden jeweils den übereck benachbarten Messerklingen $20^1$, 20 bzw, $20^2$, 22 zugehörigen Exzenterstangen 24, 26 bzw. 25, 27 je ein gemeinsames Getriebe für zwei im rechten Winkel zueinander angeordnete Exzenterscheiben vorgesehen, wobei beide Getriebe antriebsmässig miteinander verkoppelt sind.

Bei der Ausführungsform nach Fig. 1, 2 sind zwei Getriebe $28^1$, $28^2$ jeweils im vorderen Eckbereich an den Enden der sich nach dort erstreckenden Tragarme 15, 16 zwischen jeweils zwei der übereck benachbarten Exzenterstangen 24, 26 und 25, 27 vorgesehen. Von diesen beiden Getrieben $28^1$, $28^2$ werden je zwei im rechten Winkel zueinander angeordnete Exzenterscheiben 29, 30 und 31, 32 angetrieben und unmittelbar gelagert. Beide Getriebe $28^1$, $28^2$ können mittels einer durchgehenden Welle 33 antriebsmässig für einen synchronen Gleichlauf miteinander verkoppelt sein; die Einleitung der Antriebsbewegung erfolgt dabei z.B. beim Getriebe $28^2$ mittels eines Kettentriebs 34, der eine in weiter unten noch näher erläuternder Weise mit dem Zapfwellenantrieb des Schleppers gekoppelte, sich von der Trägerplatte 10 am Tragarm 19 erstreckende und an diesem gelagerte Antriebswelle 35 mit dem Getriebe $28^2$ verbindet.

Die Exzenterstangen 24, 25, 26, 27, die mit ihrem einen Ende jeweils an den zugehörigen Exzenterscheiben 29, 30, 31, 32 der in den vorderen Eckbereichen angeordneten Getriebe $28^1$, $28^2$ angelenkt sind, sind mit ihren den Getrieben abgekehrten Enden an mitlaufenden Schwingen angelenkt. Diese Schwingen befinden sich für die Exzenterstangen 26, 27 an den Schmalseiten des Schneidwerks an den Endpunkten der Tragarm 17, 18 und sind mit 36 und 37 bezeichnet. Jede der Schwingen 36, 37 ist mittels eines geeigneten Lagerbocks 38 an den Enden der Tragarme 17 bzw. 18 befestigt. Ebenso sind für die den Getrieben $28^1$, $28^2$ abgekehrten Enden der Exzenterstangen 24, 25 an der vorderen Breitseite des Schneidwerks Schwingen 39, 40 vorgesehen, die mit ihren Lagerböcken 41, 42 an einem distanzierten Endstück 43 am Ende des Tragarms 19 angebracht sind.

Im Betrieb führen die Exzenterstangen 24, 25, 26, 27 jeweils eine von der Grösse der Exzenterscheiben und der Schwingen bestimmte kombinierte Dreh/Schwing-Bewegung in vertikaler Ebene aus und ebenso auch die ihnen zugeordneten Messerklingen $20^1$, $20^2$, 21, 22. Die Schneid-

bahnen der Messerklingen beschreiben damit jeweils die in Fig. 1 durch strichpunktierte Linien angedeuteten Exzenterschleifen, wobei sich der grösste vertikale Drehhub jeweils in den beiden vorderen Eckbereichen des Schneidwerks ergibt. Und da die Messerklingen in ihrer Längenerstreckung und Antriebsbewegung derart aufeinander abgestimmt sind, dass in den beiden vorderen Eckbereichen zwischen benachbarten Messerklingen $20^1$, 21 und $20^2$, 22 einander rechtwinklig überkreuzende Schnittlinien erzeugt werden (vgl. auch Fig. 8), bedeutet die Ausführung des Geräts nach Fig. 1, 2 mit den beiden Getrieben $28^1$, $28^2$ und den Exzenterscheiben 29, 30 und 31, 32 in den beiden vorderen Eckbereichen, dass die einander überkreuzenden Schnittlinien der Messerklingen $20^1$, 21 und $20^2$, 22 jeweils mit besonders hoher Schneidgeschwindigkeit und erhöhtem Schneiddruck ausgeführt werden, so dass es auch unter Berücksichtigung der Absenkgeschwindigkeit des Schneidwerks stets zu tiefen, einander abwechselnd wirklich kreuzenden Schnitten und damit zu einer exakt verlaufenden, sauberen Eckkante am ausgeschnittenen Futterblock kommt, und zwar gerade auch bei langfaserigem Gut.

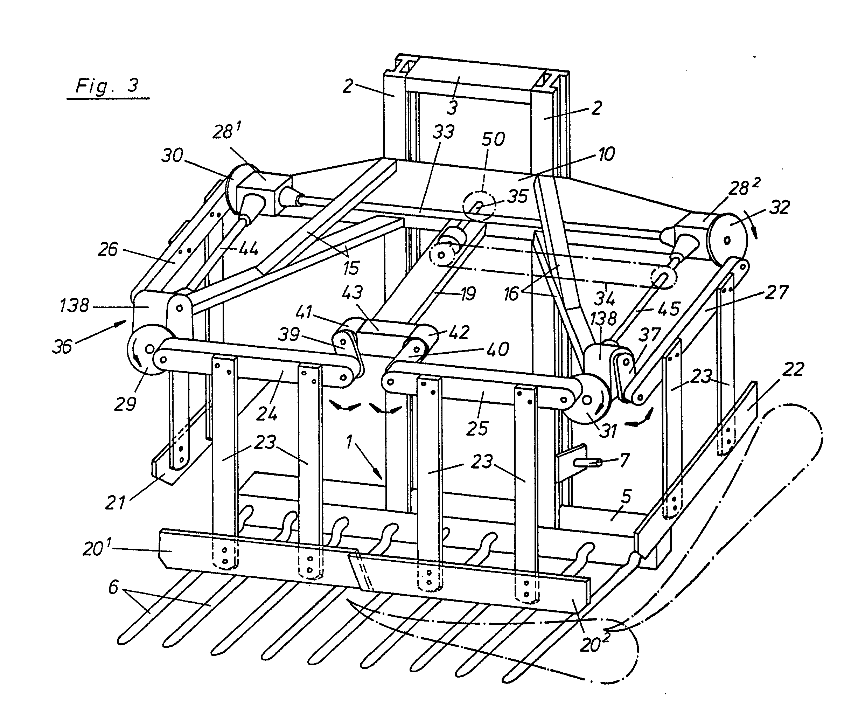

Die Ausführungsform des Geräts nach Fig. 3 unterscheidet sich von der Ausführungsform nach Fig. 1, 2 nicht grundsätzlich, so dass für gleiche bzw. gleichwirkende Teile auch die gleichen Bezugszahlen Verwendung finden können. Der Hauptunterschied besteht in der anderweitigen Antriebsgestaltung für die Exzenterstangen 24, 25, 26, 27. Und zwar befinden sich bei dieser Ausführungsform die beiden Getriebe $28^1$, $28^2$ nicht in den vorderen, sondern in den hinteren Eckbereichen des Schneidwerks und sind unmittelbar an den Enden der in diesem Fall zu beiden Seiten hin entsprechend verlängerten bzw. verbreiterten Trägerplatte 10 angebracht, womit die Tragarme 17, 18 entfallen bzw. in die Trägerplatte 10 inkorporiert sind. Zwar sind auch in diesem Fall jedem Getriebe $28^1$, $28^2$ zwei im rechten Winkel zueinander angeordnete Exzenterscheiben zugeordnet und werden von dort angetrieben, jedoch ist nur noch eine der Exzenterscheiben, nämlich jeweils die für den Antrieb der Exzenterstangen 26 bzw. 27 bestimmte Exzenterscheibe 30 bzw. 32, unmittelbar am Getriebe $28^1$ bzw. $28^2$ gelagert, während die beiden anderen rechtwinklig hierzu angeordneten Exzenterscheiben 29, 31 für den Antrieb der Exzenterstangen 24, 25 sich jeweils in den vorderen Eckbereichen in räumlicher Entfernung zu den Getrieben befinden und dort mit von den Getrieben $28^1$, $28^2$ sich nach vorn hin erstreckenden Wellen 44, 45 an den Enden der Tragarme 15, 16 gelagert sind. Dort sind besondere, zweckmässig sowohl die Lagerung der Wellen 44, 45 wie auch der Exzenterscheiben 29, 31 ermöglichende Lagerböcke 138 für die Schwingen 36, 37 angebracht.

Die Wirkungsweise des Geräts in der Ausführung nach Fig. 3 ist grundsätzlich gleich der oben zu Fig. 1, 2 bereits beschriebenen. Jedoch wird in diesem Fall durch die in die hinteren Eckbereiche des Schneidwerks gesetzten Getriebe $28^1$, $28^2$ mit den Exzenterscheiben 30, 32 für die Exzenterstangen 26, 27 erreicht, dass die zugeordneten Messerklingen 21, 22 an den hinteren Enden, also im Bereich der vertikalen Silowand, eine drehende Bewegung mit erhöhter Schneidgeschwindigkeit und erhöhtem Schneiddruck ausführen, wodurch ein Herausrupfen von Silagegut aus dem Schnittspalt zur Silowand hin verhindet wird. Die sich ergebende unterschiedliche Schneidbahn für die Messerklingen 21, 22 an den Schmalseiten des Schneidwerks ist in Fig. 3 durch die strichpunktierte Linie kenntlich gemacht.

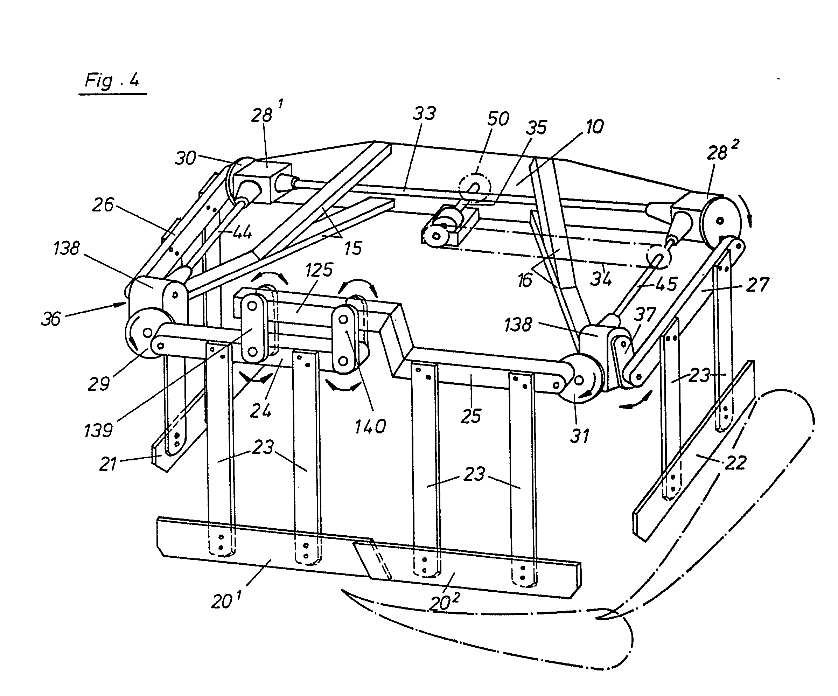

Eine weitere Ausführungsform des Geräts ist in vereinfachter Darstellung, d.h. unter Weglassung des Gestells 1 mit der Gabel 5, 6 in Fig. 4 veranschaulicht. In ihrer baulichen und antriebsmässigen Gestaltung und in ihrer Funktion gleicht diese Ausführung der vorstehend zu Fig. 3 beschriebenen Ausführungsform des Geräts. Es sind daher auch hier für gleiche bzw. gleichwirkende Teile die gleichen Bezugszahlen wie in Fig. 3 bzw. 1, 2 verwendet.

Im Unterschied zu Fig. 3 fehlt es bei der Ausführungsform nach Fig. 4 an dem sich mittig von der Trägerplatte 10 zur vorderen Breitseite des Schneidwerks hin erstreckenden Tragarm 19 zur Abstützung der Lagerböcke 41, 42 für die Schwingen 39, 40 der Exzenterstangen 24, 25, z.B. ist hier eine der beiden Exzenterstangen 24, 25, z.B. die Exzenterstange 25, mit einer nach oben abgekröpften Verlängerung 125 versehen, die sich mit Abstand oberhalb der Exzenterstange 24 und parallel zu dieser erstreckt. Die Verlängerung 125 ist über Doppelschwingen 139, 140 mit der Exzenterstange 24 bewegungsmässig gekoppelt, d.h. die Exzenterstangen 24, 25 sind mit ihren Enden übereinander mittels der Doppelschwingen 139, 140 in einem Gelenkviereck aneinander abgestützt. Die Exzenterstangen 24, 25 an der vorderen Breitseite des Schneidwerks führen sich auf diese Weise mit ihren den Exzenterscheiben 29, 31 abgewandten Enden gegenseitig selbsttragend, so dass der mittige Tragarm 19 mit den Lagerböcken 41, 42 ganz in Fortfall kommen kann, womit sich die bauliche Gestaltung des Schneidwerks vereinfacht.

Zu bemerken ist, dass die selbsttragende, festpunktfreie Abstützung und Führung der Enden der Exzenterstangen 24, 25 an der vorderen Breitseite des Schneidwerks mittels eines sich über die Doppelschwingen 139, 140 abstützenden Gelenkvierecks der Balkenenden gemäss Fig. 4 nicht etwa nur auf die dort dargestellte, der Fig. 3 entsprechende Antriebsgestaltung beschränkt ist; vielmehr liesse sich ohne weiteres auch im Rahmen der Ausführung nach Fig. 4 die Antriebsgestaltung gemäss Fig. 1, 2 verwirklichen.

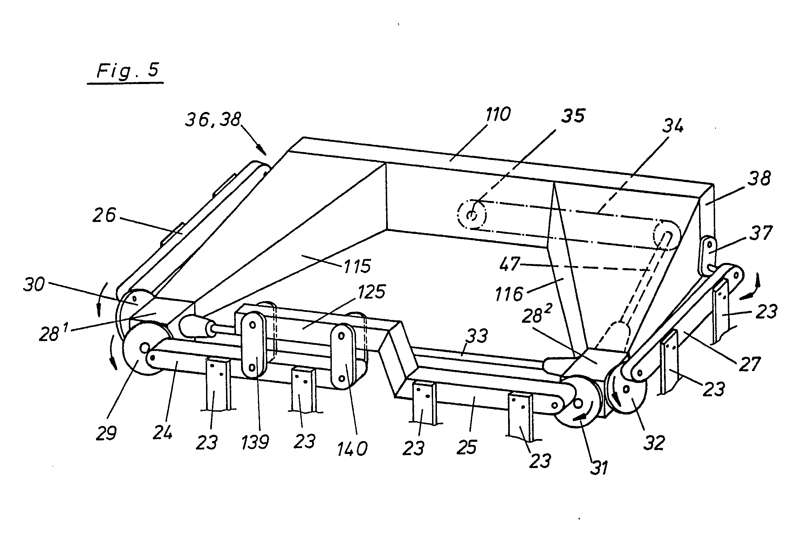

Eine derartige Ausführung ist in Fig. 5 dargestellt. Dabei sind jedoch ausserdem die Trägerplatte 10 und die Tragarme 15, 16 als Hohlprofilträger aus Blech ausgeführt und mit 110, 115, 116 bezeichnet. Die als Rechteck-Hohlprofil ausgebildete Trägerplatte 110 mit den daran befestigten, sich zu den vorderen Enden hin konisch verjüngenden Hohlkasten-Tragarmen 115, 116 bilden zusammen in Draufsicht eine angenähert V- oder U-förmige Gabel aus, in bzw. mit der alle Antriebsteile für die Exzenterstangen 24, 25, 26, 27 inkorporiert sind. So befinden sich die beiden hier wieder in den vorderen Eckbereichen vorgesehenen Getriebe 28¹, 28² in oder an den verjüngten Enden der Hohlkasten-Tragarme 115, 116, und die Lagerböcke 38 für die Schwingen 36, 37 sind in die seitlichen Enden der rechteckigen Hohlkasten-Trägerplatte 110, diese seitlich verschliessend, bündig eingesetzt. Zur Übertragung der Antriebsbewegung auf das Getriebe 28² ist eine sich von diesem durch den Tragarm 115 bis in die Trägerplatte 110 und dort gelagerte Welle 47 vorgesehen, die über den bereits beschriebenen, hier aber in das Innere der Trägerplatte eingesetzten Kettentrieb 34 von der Zapfwelle des Schleppers aus angetrieben wird. Beide Getriebe 28¹, 28² sind auch hier durch die Welle 33 antriebsmässig miteinander verkoppelt.

Es versteht sich, dass die baulich voll geschlossene bzw. gekapselte und formlich besonders ansprechende Ausführung gemäss Fig. 5 ohne weiteres auch Anwendung finden kann bei der antriebsmässigen Gestaltung gemäss Fig. 4, d.h. bei in den hinteren Eckbereichen angeordneten Getrieben 28¹, 28² und den Lagerböcken 238 in den vorderen Eckbereichen.

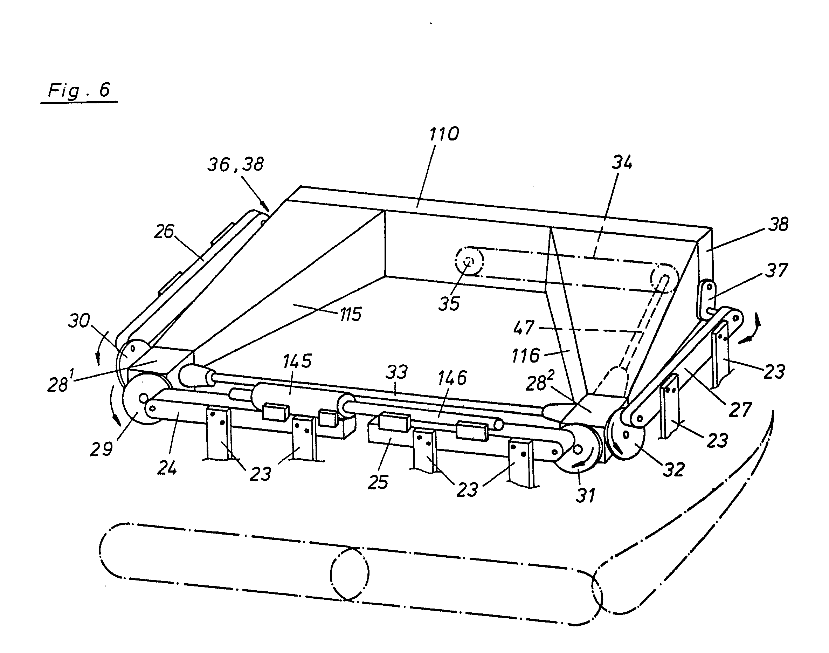

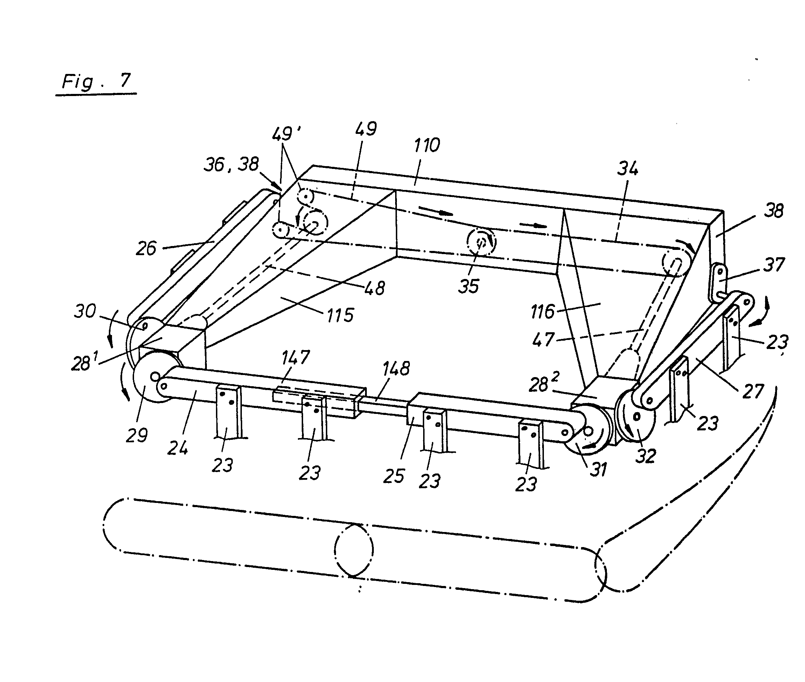

Die Ausführungsformen nach Fig. 6, 7 unterscheiden sich von der zuvor erörterten Ausführung des Geräts gemäss Fig. 5 — und damit zugleich auch von allen übrigen Ausführungsformen — durch eine anderweitige selbsttragende Abstützung bzw. Lagerung der den Exzenterscheiben 29, 31 abgekehrten Enden der Exzenterstangen 24, 25 für die beiden an der vorderen Breitseite des Schneidwerks vorgesehenen Messerklingen 20¹, 20². Und zwar sind in diesem Fall die Enden der beiden Exzenterstangen 24, 25 in einer gemeinsamen Gleitführung gegeneinander abgestützt, wobei die im gegenläufigen Drehsinn angetriebenen Exzenterscheiben 29, 31 so zueinander ausgerichtet sind, dass sich die Anlenkpunkte für die vorderen Enden der Exzenterstangen 24, 25 bei einem Versatz um 180° zueinander jeweils gleich weit entfernt vom oberen oder unteren Totpunkt befinden. Für die beiden Messerklingen 20¹, 20² ergeben sich damit als Schneidbahnen die in Fig. 6, 7 jeweils strichpunktiert angedeuteten gleichförmigen symmetrischen Exzenterschleifen mit gleich grossen Radien an beiden Enden und geradlinig parallelen Zwischenstücken. Die Exzenterstangen 24, 25 bzw. die daran gehaltenen Messerklingen 20¹, 20² führen in diesem Fall eine kombinierte Dreh/Schub-Bewegung aus.

Bei der Ausführung nach Fig. 6 besteht die gemeinsame Gleitführung für die Exzenterstangen 24, 25 aus einer auf der Oberseite einer der Exzenterstangen, z.B. der Exzenterstange 24, in geeigneter Weise befestigten Führungsbuchse 145 und einer auf der anderen Exzenterstange, hier also der Exzenterstange 25, befestigten Kolbenstange 146, die mit einem Gleitkolben (nicht dargestellt) in der Führungsbuchse 145 längsverschieblich geführt ist. Ausgehend von der in Fig. 6 dargestellten Stellung der Exzenterscheiben 29, 31 befinden sich die Exzenterstangen 24, 25 mit ihrer Gleitführung 145, 146 in der Stellung, in der ihre Enden einander am stärksten angenähert sind, wobei sich die Messerklingen 20¹, 20² mit ihren Enden im mittleren Bereich des Schneidwerks überlappen. Bei weiterer synchroner Drehung der Exzenterscheiben 29, 31 in Richtung der eingezeichneten Pfeile entfernen sich die Exzenterstangen 24, 25 mit ihren den Exzenterscheiben abgekehrten Enden voneinander, wobei die Gleitführung 145, 146 für die gleichebenige horizontale Ausrichtung der Exzenterstangen sorgt und somit die strichpunktiert eingezeichneten Schneidbahnen der Messer 20¹, 20² an der vorderen Breitseite des Schneidwerks erzeugt werden.

In Fig. 7 ist die Gleitführung für die den Exzenterscheiben 29, 31 abgekehrten Enden der Exzenterstangen 24, 25 an bzw. von diesen selbst gebildet. Die eine Exzenterstange, z.B. die Exzenterstange 24, ist dabei am Ende als eine Führungsbuchse 147 ausbildender Hohlbalken ausgeführt, während die andere Exzenterstange, in diesem Fall also die Exzenterstange 25, an ihrem verlängerten Ende als Kolbenstange 148 ausgeführt ist, die in der Exzenterstange 24 bzw. der in dieser ausgebildeten Führungsbuchse 147 längsverschieblich geführt ist. Im einfachsten Fall kann das Kastenprofil der Exzenterstange 25 etwas kleiner als das der Exzenterstange 24 und in diese eingeschoben sein, so dass beide Exzenterstangen gleichsam teleskopisch verschieblich gegeneinander abgestützt und geführt sind. Funktion der Ausführung nach Fig. 7 ist die gleiche wie zuvor zu Fig. 6 beschrieben.

In Fig. 7 ist im übrigen noch eine weitere Modifikation zu erkennen, nämlich der Fortfall der die beiden Getriebe 28¹, 28² bei den vorherigen Ausführungen antriebsmässig miteinander verkoppelnden Welle 33. Stattdessen ist auch für das Getriebe 28¹ eine besondere, innerhalb des Tragarms 115 angeordnete Antriebswelle 48 vorgesehen, die, ebenso wie die Antriebswelle 47 für das Getriebe 28², von einem eigenen Kettentrieb 49 innerhalb der Tragplatte 110 von der Antriebseingangswelle 35 mittels eines Doppelkettenrads für beide Kettentriebe 34, 49 angetrieben wird, allerdings unter Umkehrung der Drehrichtung durch Umlenkräder 49'. Der damit erreichte Fortfall der Welle 33 zwischen den beiden Getrieben 28¹, 28² bringt eine Gewichtsentlastung für die Tragarme 115, 116 an den vorderen Enden; zwischen den vorderen Enden der tragarme 115, 116 befinden sich damit nur noch die beiden Exzenterstangen 24, 25. Es versteht sich im übrigen, dass diese Antriebsgestaltung für die Getriebe 28¹, 28² auch bei den anderen, oben beschriebenen Ausführungsformen zur Anwendung kommen kann.

Anzumerken ist noch, dass Gleitführungen, wie sie zuvor für die den Messern 20¹, 20² an der vorderen Breitseite des Schneidwerks zugeordneten Exzenterstangen 24, 25 beschrieben wurden, grundsätzlich auch für die Exzenterstangen 26, 27 an den Schmalseiten Anwendung finden könnten. Beispielsweise könnten anstelle der Schwingen 36, 37 mit den Lagerböcken 38 besondere Gleitführungen für die den Exzenterscheiben 30 bzw. 32 abgekehrten Enden der Exzenterstangen 26, 27 vorgesehen sein. Auch wäre es möglich, die Exzenterstangen 26, 27 mit den zugehörigen Messerklingen 21, 22 mittig zu teilen und durch gemeinsame Gleitführungen nach Art von Fig. 6 oder 7 miteinander zu verkoppeln; in diesem Fall wären statt der Lagerböcke 38 mit den Schwingen 36 bzw. 37 zwei weitere, unter Zwischenschaltung von Getrieben angetriebene Exzenterscheiben erforderlich. Allerdings wird man die Ausführungsform nach Fig. 6 und insbesondere 7, bei denen die Messerklingen 21, 22 an den Schmalseiten die Dreh/Schwing-Bewegung ausführen und nur die Messer 20¹, 20² an der vorderen Breitseite mittels ihrer gemeinsamen Gleitführungen zur Dreh/Schub-Bewegung veranlasst sind, als besonders vorteilhaft anzusehen haben, sofern man nicht überhaupt für alle Messerklingen die Dreh/Schwing-Bewegung, wie in Fig. 1 bis 5 veranschaulicht, vorsieht.

Für alle Ausführungsformen des erfindungsgemässen Geräts gilt, dass die beiden Messerklingen 20¹, 20² an der vorderen Breitseite des Schneidwerks und die beiden Messerklingen 21, 22 an den Schmalseiten in ihren Längserstreckungen und Antriebsbewegungen derart aufeinander abgestimmt sind, dass in den beiden vorderen Eckbereichen zwischen benachbarten Messerklingen 20¹, 21 und 20², 22 einander rechtwinklig überkreuzende Schnittlinien erzeugt werden. Es versteht sich, dass die Bewegungen der Messerklingen durch Versatz der Exzenterscheiben so aufeinander abgestimmt sind, dass sie sich beim Kreuzen der Schneidbahnen bei Ausführung ihrer jeweiligen Dreh/Schwing-Bewegungen nicht berühren können. Auf diese Weise ergibt sich im Silostock beim Ausschneiden eines Futterblocks das in Fig. 8 schematisch veranschaulichte Schnittbild mit der von den seitlichen Messerklingen 21, 22 erzeugten Schnittbreite a und der von den vorderen Messerklingen 20¹, 20² erzeugten Schnittiefe b mit den in den Eckbereichen aneinander rechtwinklig überkreuzenden Schnittlinien.

Bei allen Ausführungsformen ist zweckmässig der Antrieb der Schneidvorrichtung im ganzen von der Zapfwelle des Schleppers aus in prinzipiell gleicher Weise ausgebildet, und zwar mittels eines Kettentriebs, der bei seiner Umlaufbewegung auf die Schneidvorrichtung zugleich auch eine ständige Zugkraft nach unten ausübt. Ein derartiger Kettentrieb ist in Fig. 2 veranschaulicht. Ein an der Rückseite der Trägerplatte 10 oder innerhalb der Hohlkasten-Trägerplatte 110 auf einer Antriebswelle, z.B. der Welle 35 nach Fig. 1, sitzendes Antriebskettenrad 50 ist mit geringem Abstand oberhalb eines ebenfalls an oder in der Trägerplatte 10, 110 gelagerten Umlenkrads 51 angeordnet. Auf dem Zinkenträger 5 zwischen den beiden Vertikalstützen 2 des Gestells 1 befindet sich der Zapfwellen-Antriebsanschluss mit einem Kettenrad 52, das in Richtung des eingezeichneten Pfeils umläuft. Die Antriebskette 53 wird damit in Richtung der eingezeichneten Pfeile bewegt; sie überläuft zunächst ein an der einen vertikalen Stütze des Gestells 1 ortsfest gelagertes Führungsrad 54 und sodann einen am oberen Querverbinder 3 des Gestells 1 angeordneten Kettenspanner 55. Von dort geht die Antriebskette 53 nach unten und überläuft zunächst das Umlenkrad 51 an der Trägerplatte und sodann das Antriebsrad 50, von wo aus sie wieder zum Zapfwellen-Antriebsrad 52 zurückgeführt ist. Das Antriebsrad 50 für den Antrieb der Schneidvorrichtung wird dabei mit einem konstanten, annähernd 180° betragenden Umschlingungswinkel überlaufen, und zwar vom ziehenden Trum der Antriebskette 53, welches sich vom unteren Punkt des dem Antriebsrad 50 vorgelagerten Umlenkrads 51 über das Antriebsrad 50 hinweg bis zum Zapfwellen-Antriebsrad 52 erstreckt. Der Kettentrieb steht dabei bei jeder Stellung der Trägerplatte 10, 110 mit seinem vom Antriebsrad 50 zum Zapfwellen-Antriebsrad 52 nach unten verlaufenden Trum unter Zubeanspruchung und zieht bei seinem Antrieb demzufolge auch die Trägerplatte 10, 110 nach unten.

Diese vom Antrieb der Schneidvorrichtung abgeleitete Kraftkomponente reicht aus, um die Trägerplatte 10, 110 mit der Schneidvorrichtung in Verbindung mit deren Eigengewicht gleichzeitig mit der Schneidbewegung der Messerklingen und in Abstimmung hierzu nach unten in den Silostock zu bewegen, ohne dass es einer besonderen Absenkkraft bedarf. Die Kolben/Zylinder-Anordnung 14 dient in diesem Falle lediglich als Hubvorrichtung zum Anheben der Trägerplatte 10, 110 mit dem Schneidwerk in die obere Schnittposition.

Bei einer anderweitigen Antriebsgestaltung, die ohne weiteres denkbar und möglich ist und z.B. anstelle des Zapfwellenantriebs einen oder mehrere Hydraulikmotoren vorsieht, kann die Kolben/Zylinder-Anordnung 14 so ausgebildet sein, dass das Schneidwerk mit der Trägerplatte 10, 110 mittels dieser Kolben/Zylinder-Anordnung nicht nur hebbar, sondern auch absenkbar ist, also eine Doppelfunktion hat.

Der Gegenstand der Erfindung ist nicht auf die in der Zeichnung dargestellten und vorstehend beschriebenen Ausführungsbeispiele beschränkt. Vielmehr sind im Rahmen der Ansprüche auch anderweitige Ausgestaltungen und Modifikationen denkbar und möglich. So können beispielsweise, insbesondere bei Verwendung eines rechteckigen Tragrahmens für das Schneidwerk, in bezug auf Exzenterstangen mittig angeordnete und an diesen auch mittig angreifende Exzenterscheiben vorgesehen sein, wobei die Exzenterstangen dann an beiden Enden gleitend oder Schwingend gelagert sind. Ferner können die Messerklingen 21, 22 an den Schmalseiten des Schneidwerks jeweils in zwei einzelne Abschnitte unterteilt sein, die jeweils nur an einem der herabhängenden Messerhalter 23 angebracht sind. Auch ist es möglich, die Messerklingen 20¹, 20² an der vorderen Breitseite des Schneidwerks in jeweils zwei einzelne, an je einem der Halter 23 angebrachte Abschnitte zu unterteilen. Es ist auch nicht notwendig, dass sich die Messerklingen 20¹, 20² im Mittenbereich ständig oder einander abwechselnd überlappen; es genügt, wenn sie mit ihren Schneidbahnen einander übergreifen, ohne sich zu berühren. Überlappen sich die Messerklingen $20^1$, $20^2$, ständig oder abwechselnd, so ist es zweckmässig, sie an ihren Überlappungsenden so anzuschleifen, dass sie mit entsprechenden Schrägflächen einwandfrei jeweils aufeinander aufgleiten. Durch das Überlappen der Messerklingen ergibt sich im Mittenbereich eine gewisse Schneidspalt-Verbreiterung und damit eine verbesserte Leichtgängigkeit der Messerklingen im Silostock.

Schliesslich es ist möglich, den herabhängenden Messerhaltern 23 eine andere Form zu geben, z.B. jeweils zwei einer Messerklinge zugeordnete Messerhalter 23 noch gegeneinander abzustützen oder auch in einem mehr flächenhaften Stück zu vereinigen.

## Patentansprüche

1. Gerät zum Entnehmen von Futterportionen aus Flach- oder Fahrsilos, mit einem an die Dreipunkthydraulik eines Schleppers anbaubaren Gestell (1) mit einer Gabel (5, 6) und mit einem das von der Gabel (5, 6) untergriffene Futter als Block ausschneidenden Ausschneidorgan ($20^1$, $20^2$, 21, 22), das am Gestell (1) oberhalb der Gabel (5, 6) auf- und abbewegbar ist und ein Schneidwerk umfasst, das beim Absenken den Block an mindestens zwei Seiten von oben her ausschneidet, dadurch gekennzeichnet, dass das Schneidwerk von einzelnen, jeweils für sich geführten und angetriebenen, an herabhängenden Haltern (23) befestigten Messerklingen ($20^1$, $20^2$, 21, 22) gebildet ist, die in ihrer Längserstreckung und Antriebsbewegung derart aufeinander abgestimmt sind, dass in den Eckbereichen zwischen benachbarten Messerklingen ($20^1$, 21; $20^2$, 22) einander rechtwinklig überkreuzende Schnittlinien erzeugt werden, und dass die Messerklingen ($20^1$, $20^2$, 21, 22) mit ihren Haltern (23) jeweils an eine Exzenterschleife in vertikaler Ebene ausführenden Antriebs- und Führungsorganen angebracht sind.

2. Gerät nach Anspruch 1, dadurch gekennzeichnet, dass die Antriebs- und Führungsorgane jeweils von mittels Exzenterscheiben (29, 30, 31, 32) bewegten Exzenterstangen (24, 25, 26, 27) gebildet sind.

3. Gerät nach einem der beiden Ansprüche 1 oder 2, dadurch gekennzeichnet, dass die Exzenterstangen (24, 25, 26, 27) jeweils mit einem Ende an den Exzenterscheiben (29, 30, 31, 32) angelenkt und mit dem anderen Ende schwingend oder gleitend abgestützt sind.

4. Gerät nach einem der Ansprüche 1 bis 3, dadurch gekennzeichnet, dass die Exzenterscheiben (29, 30, 31, 32) jeweils an den Eckpunkten eines gedachten Rechtecks, vorzugsweise in den übereck benachbarten Messerklingen zugehörigen vorderen Eckbereichen, angeordnet sind.

5. Gerät nach einem der Ansprüche 1 bis 4, dadurch gekennzeichnet, dass der vorderen Breitseite des Schneidwerks zumindest zwei Messerklingen ($20^1$, $20^2$) und den beiden Schmalseiten zumindest je eine Messerklinge (21; 22) zugeordnet sind.

6. Gerät nach Anspruch 5, dadurch gekennzeichnet, dass die der vorderen Breitseite des Schneidwerks zugeordneten Messerklingen ($20^1$, $20^2$) einander abwechselnd oder ständig überlappen.

7. Gerät nach einem der Ansprüche 1 bis 6, mit je einer den Schmalseiten und zwei der vorderen Breitseite des Schneidwerks zugeordneten Messerklingen, dadurch gekennzeichnet, dass zum Antrieb der beiden jeweils den übereck benachbarten Messerklingen ($20^1$, 21; $20^2$, 22) zugehörigen Exzenterstangen (24, 26; 25, 27) je ein gemeinsames Getriebe ($28^1$, $28^2$) für zwei im rechten Winkel zueinander angeordnete Exzenterscheiben (29, 30, 31, 32) vorgesehen ist.

8. Gerät nach Anspruch 7, dadurch gekennzeichnet, dass die beiden Getriebe ($28^1$, $28^2$) jeweils im vorderen Eckbereich zwischen zwei übereck benachbarten Exzenterstangen (24, 26; 25, 27) angeordnet sind und zugleich die unmittelbare Lagerung für die beiden dort jeweils angeordneten Exzenterscheiben (29, 30, 31, 32) bilden.

9. Gerät nach Anspruch 8, dadurch gekennzeichnet, dass die den Exzenterscheiben (29, 30, 31, 32) abgekehrten Enden der Exzenterstangen (24, 25, 26, 27) jeweils an mitlaufenden, in Lagerböcken (38, 41, 42; 138) abgestützten Einzelschwingen (36, 37; 39, 40) mit etwa gleicher Exzentrizität wie die Exzenterscheiben (29, 30, 31, 32) angelenkt sind und somit die Exzenterstangen eine kombinierte Dreh/Schwing-Bewegung ausführen.

10. Gerät nach Anspruch 8, dadurch gekennzeichnet, dass die den Exzenterscheiben (29, 30, 31, 32) abgekehrten Enden der Exzenterstangen (24, 25, 26, 27) in Gleitführungen abgestützt sind, und die Exzenterstangen eine kombinierte Dreh/Schub-Bewegung ausführen.

## Revendications

1. Dispositif pour prélever des portions de fourrage d'un silo plat ou d'un silo couloir, dispositif comportant un châssis (1) susceptible d'être monté sur l'hydraulique à trois points d'un tracteur, avec une fourche (5, 6) et avec un organe de découpage ($20^1$, $20^2$, 21, 22) découpant sous forme de blocs le fourrage saisi par-dessous par la fourche (5, 6), cet organe étant susceptible d'être déplacé vers le haut et vers le bas au-dessus de la fourche (5, 6) sur le châssis (1) et comportant un mécanisme de coupe qui, lorsqu'il est abaissé, découpe le bloc depuis le haut sur au moins deux côtés, dispositif caractérisé en ce que le mécanisme de coupe est constitué de lames de couteaux individuelles ($20^1$, $20^2$, 21, 22) respectivement guidées et entraînées séparément, et fixées sur des supports (23) pendant vers le bas, ces lames étant accordées entre elles, en ce qui concerne leur extension longitudinale et leur mouvement d'entraînement, de sorte que des lignes de coupe se croisant à angle droit soient obtenues dans les zones d'angles entre des lames de couteaux voisines ($20^1$, 21; $20^2$, 22), et en ce que ces lames de couteaux (20¹, 20², 21, 22) avec leurs supports (23) sont respectivement rapportées sur des organes d'entraînement et de guidage décrivant dans le plan vertical une boucle excentrée.

2. Dispositif selon la revendication 1, caractérisé en ce que les organes d'entraînement et de guidage sont respectivement constitués de barres excentriques (24, 25, 26, 27) mues par des disques excentriques (29, 30, 31, 32).

3. Dispositif selon l'une des revendications 1 ou 2, caractérisé en ce que les barres excentriques (24, 25, 26, 27) sont respectivement articulées par l'une de leurs extrémités aux disques excentriques (29, 30, 31, 32) et sont soutenues à leur autre extrémité de façon à osciller ou à coulisser.

4. Dispositif selon l'une des revendications 1 à 3, caractérisé en ce que les disquess excentriques (29, 30, 31, 32) sont respectivement disposés aux points d'angles d'un rectangle supposé, de préférence dans les zones d'angles antérieures associées à des lames de couteaux diagonalement voisines.

5. Disposotif selon l'une des revendications 1 à 4, caractérisé en ce qu'au moins deux lames de couteaux (20¹, 20²) sont associées au côté antérieur large du mécanisme de coupe, tandis qu'au moins une lame de couteau (21, 22) est associée à chacun des côtés étroits.

6. Dispositif selon la revendication 5, caractérisé en ce que les lames de couteaux (20¹, 20²) associées au côté antérieur large du mécanisme de coupe se chevauchent périodiquement ou bien en permanence.

7. Dispositif selon l'une des revendications 1 à 6, avec une lame de couteau associée à chacun des côtés étroits et avec deux lames de couteaux associées au côté antérieur large du mécanisme de coupe, dispositif caractérisé en ce que, pour l'entraînement des barres excentriques (24, 26; 25, 27) associées respectivement aux couteaux diagonalement voisins (20¹, 21; 20², 22), il est respectivement prévu un mécanisme commun (28¹, 28²) pour deux disques excentriques (29, 30, 31, 32) disposés à angle droit l'un par rapport à l'autre.

8. Dispositif selon la revendication 7, caractérisé en ce que les deux mécanismes (28¹, 28²) sont respectivement disposés dans la zone d'angle antérieure entre deux barres excentriques diagonalement voisines (24, 26; 25, 27) et constituant en même temps le support pour le montage direct des deux disques excentriques (29, 30, 31, 32) disposés respectivement à cet endroit.

9. Dispositif selon la revendication 8, caractérisé en ce que les extrémités opposées aux disques excentriques (29, 30, 31, 32) des barres excentriques (24, 25, 26, 27) sont respectivement articulées à des bielles individuelles (36, 37, 39, 40), entraînées avec elles, ayant à peu près la même excentricité que les disques excentriques (29, 30, 31, 32) et prenant appui sur des supports de paliers (38, 41, 42; 138), et qu'ainsi les barres excentriques accomplissent un déplacement combiné de rotation et d'oscillation.

10. Dispositif selon la revendication 8, caractérisé en ce que les extrémités opposées aux disques excentriques (29, 30, 31, 32) des barres excentriques (24, 25, 26, 27) prennent appui dans des guidages coulissants, et qu'ainsi les barres excentriques accomplissent un déplacement combiné de rotation et de coulissement.

## Claims

1. A device for removing portions of fodder from a flat or bunker silo, having a frame (1) which can be attached to the three-point hydraulic system of a tractor, having a fork (5, 6) and having a cut-out member (20¹, 20², 21, 22) which cuts out fodder, engaged under by the fork (5, 6), as a block, and which is movable up and down on the frame (1) above the fork (5, 6) and comprises a cutting mechanism which, during lowering, cuts out the block at least at two sides, from above, characterised in that the cutting mechanism is formed from individual knife-blades (20¹, 20², 21, 22) which are each guided and driven independently and are secured to downward-hanging holders (23), and which are adapted to one another in their longitudinal extent and drive movement in such a manner that cutting lines are produced in the corner regions between adjacent knife-blades (20¹, 21; 20², 22), which cutting lines cross over one another at right angles, and in that the knife-blades (20¹, 20², 21, 22) with their holders (23) are each mounted on drive and guide members executing an eccentric loop in the vertical plane.

2. A device as claimed in Claim 1, characterised in that the drive and guide members are each formed by eccentric bars (24, 25, 26, 27) moved by means of eccentric discs (29, 30, 31, 32).

3. A device as claimed in one of Claims 1 or 2, characterised in that the eccentric bars (24, 25, 26, 27) are each articulated, by one end, on the eccentric discs (29, 30, 31, 32) and are supported for swinging or sliding at the other end.

4. A device as claimed in one of Claims 1 to 3, characterised in that the eccentric discs (29, 30, 31, 32) are each disposed at the corner points of an imaginary rectangle, preferably in the front corner regions belonging to diagonally adjacent knife-blades.

5. A device as claimed in one of Claims 1 to 4, characterised in that at least two knife-blades (20¹, 20²) are associated with the front broad side of the cutting mechanism and at least one knife-blade (21; 22) with each of the two narrow sides.

6. A device as claimed in Claim 5, characterised in that the knife-blades (20¹, 20²) associated with the front broad side of the cutting mechanism overlap one another alternately or constantly.

7. A device as claimed in one of Claims 1 to 6, with one knife-blade associated with each of the narrow sides and two knife-blades associated with the front broad side of the cutting mechanism, characterised in that a common gear (28¹, 28²) for each two eccentric discs (29, 30, 31, 32) disposed at right angles to one another is provided for the drive of each of the two eccentric bars (24, 26; 25, 27) associated with the diagonally adjacent knife-blades (20¹, 21; 20², 22).

8. A device as claimed in Claim 7, characterised in that each of the two gears (28¹, 28²) is disposed in the front corner region between two diagonally adjacent eccentric bars (24, 26; 25, 27) and, at the same time, form the direct bearing arrangement for the two eccentric discs (29, 30, 31, 32) disposed there in each case.

9. A device as claimed in Claim 8, characterised in that the ends of the eccentric bars (24, 25, 26, 27) remote from the eccentric discs (29, 30, 31, 32) are each articulated, with substantially the same eccentricity as the eccentric discs (29, 30, 31, 32) on following individual rocker arms (36, 37, 39, 40) supported in bearing blocks (38, 41, 42; 138), and so the eccentric bars execute a combined rotary/swinging movement.

10. A device as claimed in Claim 8, characterised in that the ends of the eccentric bars (24, 25, 26, 27) remote from the eccentric discs (29, 30, 31, 32) are supported in sliding guides and the eccentric bars execute a combined rotary/thrust movement.

Fig. 1

0 068 305

0 068 305

*Fig . 2*

**Silostock**

*Fig. 8*

13

Fig. 3

0 068 305

Fig . 4

0 068 305

Fig. 5

Fig. 6

_Fig . 7_